Europäisches Patentamt

(19) European Patent Office

Office européen des brevets

(11) Numéro de publication: **0 127 514**
**B1**

(12) **FASCICULE DE BREVET EUROPÉEN**

(45) Date de publication du fascicule du brevet:
**02.09.87**

(21) Numéro de dépôt: **84400979.5**

(22) Date de dépôt: **15.05.84**

(51) Int. Cl.⁴: **G 01 N 15/08**

(54) **Méthode et appareil de mesure dynamique des aires massiques (surfaces spécifiques) et de détermination d'isothermes par adsorption et désorption d'un mélange gazeux de composition constante.**

(30) Priorité: **18.05.83 FR 8308242**

(43) Date de publication de la demande:
**05.12.84 Bulletin 84/49**

(45) Mention de la délivrance du brevet:
**02.09.87 Bulletin 87/36**

(84) Etats contractants désignés:
**AT BE CH DE FR GB IT LI LU NL SE**

(56) Documents cité:
**FR-A-1 579 273**
**US-A-3 211 006**
**US-A-3 850 040**

(73) Titulaire: **ETAT FRANCAIS représenté par Le Ministère de l'Urbanisme et du Logement LABORATOIRE CENTRAL DES PONTS ET CHAUSSEES, 58 boulevard Lefebvre, F-75732 Paris Cedex 15 (FR)**

(72) Inventeur: **Witier, Pierre Gaston, 41 rue Brancion, F-75015 Paris (FR)**

(74) Mandataire: **Hasenrader, Hubert, Cabinet BEAU DE LOMENIE 55, rue d'Amsterdam, F-75008 Paris (FR)**

EP 0 127 514 B1

## Description

L'invention concerne la mesure des aires massiques et la détermination d'isothermes d'adsorption et de désorption complets par une méthode et un appareillage du type BET dynamique à composition de mélange gazeux constante.

Cette méthode devant son nom à Brunauer-Emmett-Teller, est connue notamment par le brevet americain n° 3 211 006, ainsi que par un article de MM. POMMIER, JUILLET et TEICHNER paru dans le Bulletin de la Société Chimique de France n° 4 (1972) 1268-1273.

L'appareillage connu par ce dernier document comporte, d'amont en aval: une source d'un mélange à composition constante de gaz non adsorbable (hélium) et d'adsorbat (azote), suivie d'un manomètre détendeur; et deux circuits parallèles respectivement de mesure et de référence traversant un catharomètre (détecteur à conductibilité thermique). Le circuit de mesure comporte, à la suite, la cellule porte-échantillon, plongée dans un vase Dewar, une vanne d'injection à six voies pour procéder à l'étalonnage de l'appareil, et un régulateur de débit.

La méthode et l'appareillage décrits dans les documents précités ont déjà fait largement progresser la sensibilité et la rapidité des mesures par rapport aux méthodes et appareils utilisés précédemment.

La présente invention vise à encore améliorer les performances de ce type de mesure, en particulier la rapidité et la précision.

A cet effet, l'invention propose dans la revendication 1 une méthode de BET dynamique selon laquelle, à la différence de celle précédemment décrite, on fait varier la pression régnant sur l'échantillon entre une valeur inférieure subatmosphérique et des valeurs supérieures subatmosphériques ou non.

Dans ce but, les deux circuits de référence et de mesure, comme indiqué dans la revendication 2, débitent sur une pompe à vide.

En effet dans la méthode du BET dynamique, pour déterminer un point de l'isotherme d'adsorption, on se place à une pression telle que le produit de cette pression par la concentration en adsorbat soit égal à une valeur prédéterminée. On peut ainsi, par exemple, déterminer le même point à une pression de 0,2 MPa avec un mélange à 5 % d'adsorbat ou à une pression de 0,025 MPa avec un mélange à 40 % d'adsorbat.

Opérer avec un mélange gazeux riche en adsorbat permet d'augmenter de façon importante la vitesse des échanges et donc de diminuer la durée des manipulations.

Il est également possible de faire varier la pression dans un rapport donné (par exemple 10) en utilisant des pressions maximales très inférieures à celles des appareils n'utilisant pas cette technique.

L'appareillage de l'invention trouve une efficacité renforcée lorsque, selon un autre aspect de l'invention, le régulateur de débit du circuit de mesure est placé en amont de la cellule porte-échantillon, tandis qu'on fait varier la pression totale régnant sur l'échantillon au moyen d'une perte de charge variable obtenue par une vanne de laminage (de préférence une vanne-aiguille) interposée entre la cellule et le catharomètre.

En effet, comme il sera expliqué plus loin, il a été constaté selon l'invention que la présence d'un régulateur de débit entre la cellule d'adsorption et le catharomètre était une des causes de l'élargissement des pics d'adsorption dans les appareillages connus, en constituant un volume mort interposé dans le circuit.

Rappelons que dans tous les systèmes proposés jusqu'ici, il existe dans le circuit gazeux un détendeur ou un régulateur de débit entre la cellule où s'effectue l'adsorption et le circuit du catharomètre, ce qui introduit des volumes morts importants.

L'utilisation d'une vanne de laminage entre la cellule porte-échantillon et le catharomètre autorise en outre une perte de charge très faible entre ces deux parties du montage et donc une pression minimum très basse dans la cellule d'adsorption.

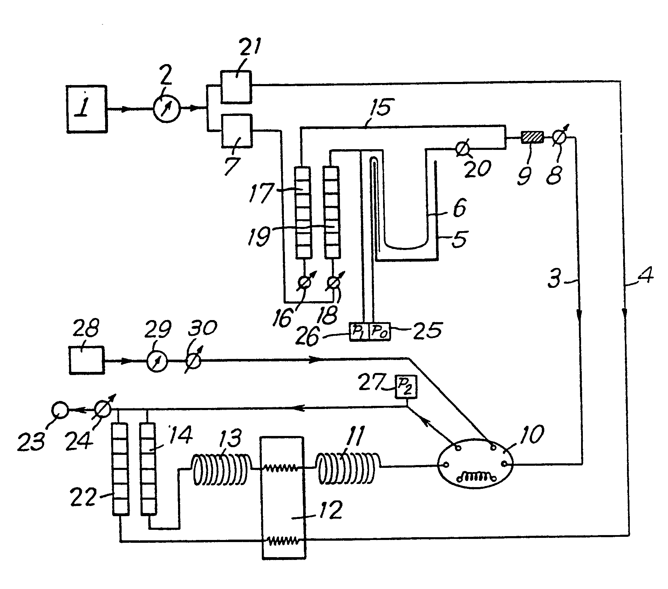

D'autres avantages et caractéristiques ressortiront de la description suivante, donnée à titre d'exemple non limitatif d'un mode de réalisation d'un appareillage de l'invention. Il sera fait référence à la figure unique représentant un schéma de montage de l'appareil de l'invention.

Ce schéma montre une source 1 d'un mélange gazeux à composition constante d'un adsorbat, par exemple l'azote, et d'un gaz non adsorbable, par exemple l'hélium. Un détendeur 2 est placé derrière la source 1.

Deux circuits, respectivement de mesure 3 et de référence 4, sont placés en parallèle.

Le circuit de mesure 3 comporte, un régulateur de débit 7, un Dewar 5 d'azote liquide dans lequel peut être plongée la cellule d'adsorption 6. En aval de la cellule 6, on a placé une vanne de laminage 8 (de préférence une vanne-aiguille) dotée d'un filtre de protection 9, une vanne d'échantillonnage à gaz à six voies classique 10, un premier ballast 11, le catharomètre à filaments 12, un second ballast 13, et un rotamètre 14 pour la visualisation du débit.

Le circuit de mesure 3 comporte également une dérivation 15 de la cellule porte-échantillon 6, la dérivation 15 comprenant une vanne-aiguille 16 et un rotamètre 17. La branche passant par la cellule porte-échantillon comporte également une vanne-aiguille 18 et un rotamètre 19, en amont de la cellule, ainsi qu'une vanne d'arrêt 20 en aval.

Le circuit de référence 4 comporte un régulateur de débit 21, le catharomètre 12, et un rotamètre 22.

Les deux circuits de mesure 3 et de référence 4 se rejoignent pour être reliés à une pompe à vide 23 par l'intermédiaire d'une vanne-aiguille 24.

Des jauges 25, 26, 27 permettent la mesure des

pressions $P_0$ (tension de vapeur saturante de l'azote), $P_1$ (pression totale régnant sur l'échantillon), $P_2$ (pression dans la boucle d'échantillonnage).

Une alimentation 28 en hélium ou en azote est reliée à la vanne d'échantillonnage 10 à l'aide d'un détendeur 29 et d'une vanne-aiguille 30, et permet, en liaison avec ladite vanne 10 à six voies, l'étalonnage du détecteur.

Le fonctionnement de l'appareil est le suivant:

Après avoir réglé les débits référencs et mesure (p.e. 70 ml/min) grâce aux régulateurs 21 et 7, on règle la pression dans le circuit de catharomètre 12 à la valeur $P_2$ (par exemple 0,012 MPa) avec la vanne-aiguille 24; on ajuste ensuite la pression dans la cellule 6 à une valeur choisie $P_1$ avec la vanne-aiguille 8. La vanne 8 est de préférence à vernier digital. Cet ajustement peut être manuel ou automatique, par exemple en réalisant un asservissement entre la vanne-aiguille 8 (motorisée dans ce cas) et la jauge de pression 26. On immerge alors le porte-échantillon 6 dans l'azote liquide du vase 5 et on enregistre le pic d'adsorption avec la pression correspondant $P_1$; le ballast de stabilisation 11, consistant en un tube de grande longueur (p.e. 5m) et de fort diamètre intérieur (p.e. 12mm), permet de différer de quelques dizaines de secondes l'apparition du signal de concentration au catharomètre 12; le débit de gaz est alors revenu à sa valeur initiale, ce qui est nécessaire pour la mesure précise des quantités de gaz adsorbées ou désorbées. On continue la manipulation en augmentant la pression $P_1$ jusqu'à de nouvelles valeurs $P'_1$, $P''_1$, etc., en actionnant la vanne-aiguille 8 de manière à couvrir le domaine de validité de la loi BET ou à obtenir un isotherme complet; on diminue ensuite la pression, toujours par paliers, pour obtenir l'isotherme de désorption.

L'avantage principal du montage de l'invention, par rapport aux appareils connus, réside, comme on l'a déjà noté, en ce que l'on peut choisir une pression minimum de travail dans la cellule porte-échantillon inférieure à la pression atmosphérique, et cette pression peut être choisie d'autant plus basse que la vanne-aiguille 8 permet de maintenir une différence de pression très faible (quelques k Pa) entre le porte-échantillon et le circuit du catharomètre. On peut par exemple obtenir des pressions de 0,015 MPa dans le porte-échantillon si le circuit du catharomètre est à une pression de 0,012 MPa; ceci réduit d'autant les pressions maximales nécessaires à l'obtention de l'isotherme complet et permet d'augmenter le pourcentage d'adsorbat dans le mélange adsorbat/gaz non adsorbable, ce qui est particulièrement intéressant dans le cas d'isothermes complets à l'azote (pour les fortes surfaces).

Par ailleurs, l'utilisation de pressions faibles permet d'augmenter la vitesse des échanges thermiques en autorisant l'utilisation de cellules en verre mince, par exemple en forme de "U", facilement adaptables sur des raccords de type "Swagelok". Ces faibles pressions augmentent également la sécurité.

Un deuxième aspect avantageux de l'invention consiste en ce que le système de régulation de pression (la vanne-aiguille 8) introduit un volume mort très faible (de l'ordre du $cm^3$ ou moins), d'où un élargissement minimum des pics d'adsorption et une augmentation de la sensibilité, de la précision et de la rapidité de la mesure.

On notera à ce sujet que le ballast 11, ou les canalisations du circuit de 3 à 4 mm de diamètre ne constituent pas des volumes morts au sens où on l'entend ci-dessus, c'est-à-dire des volumes assez larges entrainant un élargissement notable du pic d'adsorption (tels que l'occasionneraient un régulateur de débit ou un détendeur).

Un autre avantage du montage de l'invention est que le système de variation de la pression évite des "à coups" de débit entre deux points de mesure successifs (ces variations brusques peuvent, sur certains appareils, projeter une partie de l'échantillon dans les canalisations).

Selon un exemple d'utilisation avec un mélange à 40 % d'azote et 60 % d'hélium et une valeur de $P_0$ (pression de vapeur saturante d'azote) de 0,1 MPa, on peut déterminer un isotherme de $P/P_0 = 0,06$ à $P/P_0 = 1$ en faisant varier $P_1$ de 0,015 à 0,25 MPa absolu. La mesure de l'aire massique ($P/P_0$ de 0,08 à 0,3) s'effectue en faisant varier la pression $P_1$ de 0,015 à 0,075 MPa; une mesure d'aire massique utilisant 4 points de l'isotherme peut être effectuée en 10 à 15 minutes sur un gel de silice (temps de dégazage de l'échantillon exclu).

Lors de l'adsorption (ou de la désorption), il faut veiller à ne pas dépasser une concentration limite en azote pour ne pas avoir d'erreur de linéarité excessive du catharomètre 12; par exemple, on s'efforce de limiter la concentration d'azote dans la gamme 35-45 %; ceci justifie l'emploi de la dérivation 15 (de rapport de division ajustable avec les vannes 16 et 18) sur la cellule d'adsorption 6, surtout pour les premiers points des échantillons de forte surface. Cette dérivation 15 permet aussi d'isoler la cellule lors des changements d'échantillons sans interrompre le débit de gaz dans l'appareil.

Une autre particularité du montage de l'invention réside dans le ballast de stabilisation 13 (analogue au ballast 11) qui permet de différer le passage d'un gaz de composition modifiée dans la vanne-aiguille 24 pendant les mesures, ce qui risquerait de provoquer des variations (faibles) du débit et de $P_2$. Ce ballast a comme fonction annexe d'éviter, lors de l'établissement du vide partiel dans le circuit du catharomètre 12, le passage d'un débit gazeux trop important dans le catharomètre, ce qui pourrait endommager ses filaments.

## Revendications

1. Méthode de mesure des aires massiques et de détermination d'isothermes d'adsorption et de désorption complets, du type BET dynamique à composition de mélange gazeux constante, caractérisée en ce qu'on fait varier la pression régnant sur l'échantillon entre une valeur inférieure subatmosphérique et des valeurs superieures subatmosphériques ou non.

2. Appareil de mesure des aires massiques et de détermination d'isothermes d'adsorption et de désorption complets, du type BET dynamique à composition de mélange gazeux constante, comportant d'amont en aval: une source (1) dudit mélange gazeux constitué par un adsorbat et un gaz non adsorbable; un détendeur (2); en parallèle: un circuit de référence (4) et un circuit de mesure (3) comprenant une cellule porte-échantillon (6), ces deux circuits (3, 4) traversant un catharomètre (12); caractérisé en ce que les deux circuits (3, 4) débitent sur une pompe à vide (23).

3. Appareil selon la revendication 2, caractérisé par un régulateur de débit (7) placé en amont de la cellule porte-échantillon (6) et une vanne de réglage de la perte de charge (8) interposée entre la cellule porte-échantillon (6) et le catharomètre (12).

4. Appareil selon la revendication 3, caractérisé en ce que le circuit de mesure (3) comporte un ballast (11) placé juste en amont du catharomètre (12).

5. Appareil selon la revendication 4, caractérisé en ce qu'il est prévu un ballast (13) juste en aval du catharomètre.

6. Appareil selon l'une quelconque des revendications 3 à 5, caractérisé en ce qu'il est prévu une dérivation (15) de la cellule porte-échantillon (6) avec un rapport de débits réglable.

7. Appareil selon l'une quelconque des revendications 3 à 6, caractérisé en ce que la vanne de réglage (8) est une vanne-aiguille.

## Patentansprüche

1. Verfahren zum Messen spezifischer Oberflächen und zur Bestimmung von Isothermen der Adsorption und vollständiger Desorptionen nach dem dynamischen BET-Verfahren an einer gasförmigen Mischung mit konstanter Zusammensetzung,
dadurch gekennzeichnet, daß der Druck, mit dem die Probe beaufschlagt ist, zwischen einem Wert unterhalb des Atmosphärendrucks und Werten oberhalb des Atmosphärendrucks oder gleich des Atmosphärendrucks variiert wird.

2. Vorrichtung zum Messen spezifischer Oberflächen und zur Bestimmung von Isothermen der Adsorption und vollständiger Desorptionen nach dem dynamischen BET-Verfahren an einer gasförmigen Mischung mit konstanter Zusammensetzung, die in Strömungsrichtung aufweist: eine Quelle (1) der Gasmischung, bestehend aus einem Adsorbat und einem nicht adsorbierbarem Gas, einem Entspannungsventil (2), parallel dazu: einen Bezugskreis (4) und einen Meßkreis (3) mit einer die Probe tragenden Zelle (6), wobei die beiden Kreise (3, 4) ein Katharometer (12) durchqueren,
dadurch gekennzeichnet, daß die beiden Kreise (3, 4) in einer Vakuumpumpe (23) münden.

3. Vorrichtung nach Anspruch 2,
gekennzeichnet durch einen Durchflußregler (7), der stromauf zu der die Probe (6) tragenden Zelle angeordnet ist und durch ein Druckverlustregelventil (8), das zwischen der die Probe tragenden Zelle (6) und dem Katharometer (12) angeordnet ist.

4. Vorrichtung nach Anspruch 3,
dadurch gekennzeichnet, daß der Meßkreis (3) eine Drossel (11) aufweist, die stromauf zum Katharometer (12) angeordnet ist.

5. Vorrichtung nach Anspruch 4,
dadurch gekennzeichnet, daß eine Drossel (13) stromab auf das Katharometer folgend angeordnet ist.

6. Vorrichtung nach einem der Ansprüche 3 bis 5,
dadurch gekennzeichnet, daß eine Umgehung der die Probe (6) tragenden Zelle mit einer Durchflußregelung vorgesehen ist.

7. Vorrichtung nach einem der Ansprüche 3 bis 6,
dadurch gekennzeichnet, daß das Regelventil (8) ein Verteilventil ist.

## Claims

1. Method for measuring solid surface areas and for determining complete adsorption and desorption isotherms, of the dynamic BET-type and having a constant composition of gaseous mixture, characterized in that the pressure on the sample is caused to vary from a lower subatmospheric value to a plurality of upper values either less than or greater than atmospheric pressure.

2. A dynamic BET-type apparatus, with constant composition of gaseous mixture, for measuring solid surface areas and for determining complete adsorption and desorption isotherms, comprising upstream to downstream: a source (1) of said gaseous mixture constituted of an adsorbate and a non-adsorbable gas; a pressure reducer (2); a reference circuit (4) and a measurement circuit (3) arranged in parallel and comprising a sample-holding cell (6), both of said circuits (3, 4) going through a katharometer (12); characterized in that both circuits (3, 4) feed a vacuum pump (23).

3. An apparatus according to claim 2, characterized in that a flow control valve (7) is placed upstream from the sample-holding cell (6) and a throttling valve (8) for adjusting the pressure drop is inserted between the sample-holding cell (4) and the katharometer (12).

4. An apparatus according to claim 3, characterized in that the measurement circuit (3) comprises a ballast (11) located immediately upstream from the katharometer (12).

5. An apparatus according to claim 4, characterized in that a ballast (13) is provided immediately downstream from the katharometer (12).

6. An apparatus according to any one of claims 3 to 5, characterized in that a bypass (15) is provided around said sample-holding cell (6),the flow within the bypass circuit being adjustable.

7. An apparatus according to any one of claims 3 to 6, characterized in that said throttling valve (8) is a needle valve.